# EUROPEAN PATENT APPLICATION

(11) **EP 1 329 260 A1**
(43) Date of publication of application: **23.07.2003**
(21) Application number: 02707362.6
(22) Date of filing: 18.02.2002
(51) Int. Cl.: B01J 29/40, B01J 37/04, B01J 37/08

(54) **METHOD FOR PRODUCING A ZEOLITE-CONTAINING CATALYST**

(30) Priority: 14.11.2001 RU 2001130678
(71) Applicant: Belunik, Alexandr Ivanovich, Moskovskaya obl., 143952 (RU); Kryuchkov, Viktor Alekseevich, Kaluzhskaya obl. 249020 (RU); Makarov, Pavel Alekseevich, Moscow, 117311 (RU)
(72) Inventor: Kryuchkov, Viktor Alekseevich, Kaluzhskaya obl. 249020 (RU); MAKAROV, Pavel Alekseevich, Moscow, 117311 (RU)
(74) Representative: Kador & Partner
(86) International application number: RU0200055
(87) International publication number: WO03041861

(57) **Abstract**

This invention relates to the field of chemistry, namely, to the processes for producing catalysts to convert a light hydrocarbon material into motor blending fuel. The process comprises mixing an ammonium-form ZSM-5 ceolite powder with a zinc salt solution and with an ammonium salt solution, filtration of the mixture, flushing of a deposit in water, evaporation, formation of granules with aluminum oxide as a binder, drying and calcination. Zirconium acetate solution is added into the mixture. After calcination the granules are subjected to a treatment at 450 ÷ 550 °C for 5 ÷ 10 h by gas mixture of the following composition, mass %: carbon oxide - 4 ÷ 8, carbon dioxide - 4 ÷ 12, hydrogen - 6 ÷ 8, oxygen - 2 ÷ 6, water vapor - 2 ÷ 4, the balance is nitrogen. As a result, the period of catalyst stable activity increases.

## Description

### Field of art

This invention relates to the field of chemistry, namely, to the processes for producing the catalysts to convert light hydrocarbon materials into motor blending fuel.

### State of art

There is a known method for producing a ceolite-containing catalyst (US A1, 4157293, 1979), which comprises mixing an ammonium-form ZSM-5 ceolite powder with 0.5 N solution of ZnCl₂ and 0.5 N solution of NH₄CI, filtration of the mixture, flushing it in water to remove Cl ions, evaporation to a required moisture content, which affords formation of granules with Al₂O₃ as a binder, drying at 100-120°C for 10 hours and calcination at 540°C. The obtained product has a residual Zn content of ∼ 1% by mass. Salts of various metals, for instance Ge, Cu, are added as promoting additives in synthesis of a catalyst. An amount of promoters ordinarily does not exceed 1%.

The disadvantage of the known method is a comparatively short period of the stable activity of the catalyst produced by this method due to coke deposits formed on it in service.

The most similar to this invention is a process for producing a ceolite-containing catalyst to convert hydrocarbon material into motor fuel (RU A1, 2024305, 1994). The known process comprises mixing an ammonium-form ZSM-5 ceolite with zinc salt solution and ammonium salt solution, filtration of the mixture, flushing of deposit in water, evaporation, formation of granules with a binder, aluminum oxide, drying and calcination, with the granules being treated after calcination at 450 ÷ 550 °C for 5 to 10 h by gas mixture of the following composition, mass %:

| | |
|---|---|
| Carbon oxide | 4 ÷ 8 |
| Carbon dioxide | 4 ÷ 12 |
| Hydrogen | 10 ÷ 20 |
| Oxygen | 2 ÷ 6 |
| Water vapor | 5 ÷ 15 |
| Nitrogen | balance |

The known process makes it possible to increase a period of stable activity of the catalyst produced by this method. However to improve technical and ecological indices of the process of light hydrocarbon material conversion into motor blending fuel, a longer period of catalyst stable activity is required.

### Disclosure of the invention

An object of this invention is to provide a process for producing a ceolite-containing catalyst to convert hydrocarbon material into motor oil with improved parameters.

By solving this problem it is possible to gain a technical effect, which provides a way for increasing the period of catalyst stable activity.

This technical effect is gained by the fact that in the process for producing a ceolite-containing catalyst for converting hydrocarbon material into motor fuel, which comprises mixing an ammonium-form ZSM-5 ceolite powder with a zinc salt solution and an ammonium salt solution, filtration of the mixture, flushing of the deposit in water, evaporation, formation of granules with aluminum oxide as a binder, drying and calcination, a zirconium acetate solution is added into the mixture, and after calcination the granules are subjected to treatment at 450 ÷ 550 °C for 5 ÷ 10 h by gas mixture of the following composition, mass %:

| | |
|---|---|
| Carbon oxide | 4 ÷ 8 |
| Carbon dioxide | 4÷ 12 |
| Hydrogen | 6 ÷ 8 |
| Oxygen | 2 ÷ 6 |
| Water vapor | 2 ÷ 4 |
| Nitrogen | balance |

Comparative analysis of this problem solution with the closest prototype has shown that the process of the present invention differs from the known process in the fact that in mixing the ammonium-form ZSM-5 ceolite powder with Zn salt solution and NH₄ salt solution, Zr acetate solution is added into the suspension, and the granules are subjected to treatment at 450 ÷ 550 °C for 5 ÷ 10 h by gas mixture containing, mass %: carbon oxide 4 ÷ 8; carbon dioxide 4 ÷ 12; hydrogen 6 ÷ 8; oxygen 2 ÷ 6; water vapor 2 ÷ 4; and the balance nitrogen.

It has been found experimentally that the change in oxygen and water vapor content of gas mixture has a governing effect upon the period of stable activity of the catalyst containing zirconium in addition to zinc.

Thus, as compared with the most similar prototype, lower concentrations of these substances have an effect on the extension of the period of catalyst stable activity. In the most similar prototype the gas mixture by which the catalyst is treated contained 10 ÷ 20 mass % of hydrogen and 15 mass % of water vapor. For zirconium catalyst the effect was achieved at a lower content of the above said substances (6 ÷ 8 mass % of hydrogen and 2 ÷ 4 mass % of water vapor).

Therefore the described process satisfies the condition for patentability as to novelty.

An essence of the process consists in that the catalyst treatment by gas mixture of the above said composition results in considerable reduction of carbonization side processes when the catalyst is used in the reaction of aromatization of light hydrocarbon material. As a result a period of catalyst stable activity increases. Introduction of zirconium into the catalyst in addition to zinc favors further increase of the stable activity period.

The basis for the above conclusions is an experimental study on investigation of the effect of gas mixture composition and treatment conditions. It has shown that overrunning the ranges applied for results in the shortening of the stable activity period due to, on the one hand, (when lower limits are overrun) lower efficiency of topochemical reactions resulting in formation of active centers with a prolonged period of stable activity. On the other hand, (in the case that upper limits are overrun) the processes of destruction of active centers and catalyst structures become dominant due to thermal gas treatment.

Realization of the present invention is proved by the following examples.

Example 1. 11 l of ammonium sulfate solution in a condensate (water with a reduced salt content) with a concentration of 30 g/l in an amount, which provides 5 equiv. (NH₄)₂SO₄ per 1 equiv. Na₂O in ceolite are prepared in a tank with an agitator. 1245 g of sodium-form high-silica ceolite is fed into the prepared solution during agitation. The obtained suspension is heated to 50 ÷ 60 °C and kept at this temperature for 2 h. The ceolite suspension is poured off on a Nutsche filter, and after squeezing out the mother solution it is flushed in 12.45 1 of condensate (in terms of 1 kg of dry substance). The obtained cake is discharged from the Nutsche filter and subjected to subsequent treatment (cation exchange) until Na₂O residual content of ceolite is no more than 0.1 %. After flushing the cake and conducting the cation exchange with ammonium sulfate the ceolite powder is treated by 6.8 1 of 0.5 N solution of Zn (CH₃COOH)₂. The treatment is conducted for 2 h at 60 °C. The solutions of Zr acetate in the amounts corresponding to its content of catalyst of 0.2 - 0.5 % Zr are added into the obtained suspension. Then the ceolite suspension is filtered and fed for granulation. Ceolite is granulated with a binder at the following mixing ratio: ceolite 60 mass % (1245 g), Al₂O₃ 36.5 mass % (757 g), B₂O₃ 3.5 mass % (72.6 g). B₂O₃ is added to reduce binder acidity. The procedure of preparing the mix for granulation is as follows: a calculated quantity of the cake (1245 g), Al₂O₃ 757 g, B₂O₃ 72.6 g are fed into the mixer and peptization of the mix is carried out with an addition of HNO₃ to pH 3. The mass is stirred to a uniform condition and evaporated to a moisture content required for granulation (40 ÷ 48 %).

The mix prepared for granulation is plasticized on the mills and thereafter granulated on a screw granulator. The granules are cured in the air for 20 h and thereafter dried in the drying chamber for 10 h. The obtained granules are calcinated in the electric furnace at 500 ÷ 550 °C for 6 h. A temperature is increased to a specified value at a rate of no more than 150 °C per hour. The obtained catalyst has the following composition: high-silica ceolite of ZSM-5 type (with SIO₂/Al₂O₃ ratio of 39) 57.0; Al₂O₃ 36.2; B₂O₃ 3.5; Zn 3.0; Zr 0.2.

Thereafter the catalyst is subjected to treatment at 500 °C for 6 h by the gas mixture containing, mass %: carbon oxide 5; carbon dioxide 6; water vapor 2; hydrogen 6; oxygen 5; the balance nitrogen. On completion of the treatment by the gas mixture the catalyst granules are blown by the air and cooled down in the air stream to a room temperature. Then the granules are discharged into a hopper, screened to remove dust and loaded into cellophane bags placed into barrels. On testing 50 g of the catalyst with a density of 0.7 g/cm were loaded into the reactor. Light hydrocarbons C2 - C₅ were used as a raw material. The process was conducted at 500 °C, at a volume velocity of 1.5 h in terms of liquid raw material. Under these conditions the yield of aromatic hydrocarbons was (C₆ - C₉) 64.1 %, the yield of aliphatic hydrocarbons was 3.1 %, the yield of gases was 28% (including hydrocarbon - 2.5%, methane - 4.0%, C₂ - 7.5 %, C₃ + C₄ - 19 %), coke was 0.5 %.

The catalyst prepared by this method retains the stable activity in the reaction of conversion of light hydrocarbon long distillate for 260 h, and in the reaction of distilled gasoline conversion for 500 h. The stable activity of the reference catalyst prepared by the prototype method (the catalyst contained 3.0 mass % of Zn) is 100 h and 280 h, respectively. The stable activity of the catalyst was evaluated by the yield of aromatic hydrocarbons. 30% reduction of the yield served as a stability criterion.

Example 2. The catalyst was produced in accordance with example 1, except for the fact that for catalyst treatment there was used a gas mixture of the following composition, mass %: carbon oxide 6; carbon dioxide 7; water vapor 4; hydrogen 8; oxygen 5; the balance nitrogen. The time of catalyst gas treatment is 6 h. The period of stable activity in conversion of light hydrocarbon long distillate is 260 h and that of distilled gasoline is 520 h.

Example 3. The catalyst was produced in accordance with example 1, except for the fact that for treatment there was used a gas mixture of the following composition, mass %: carbon oxide 8; carbon dioxide 10; water vapor 8; hydrogen 6; oxygen 5; the balance nitrogen. The time of catalyst gas treatment is 6 hours. The period of stable activity in the process of conversion of light hydrocarbon long distillate is 230 h and that for distilled gasoline is 460 h.

The effect of the time of treatment of catalyst samples is shown in examples 4, 5 and 6. It should be noted that, when the time of catalyst treatment by gas mixture was less than 3 hours, it could not attain an operating activity. A high activity (conversion of no less than 70% and selectivity in the yield of aromatic hydrocarbons of no less than 60%) was achieved after treatment by gases for 5 - 10 hours.

The time of catalyst treatment by gas mixture also had an effect on the period of the catalyst stable activity.

Example 4. The catalyst produced in accordance with example 1 was subjected to treatment by the gas mixture of the following composition, mass %: carbon oxide 6; carbon dioxide 7; water vapor 4; hydrogen 8; oxygen 5; the balance nitrogen. The time of treatment is 5 hours. The period of stable activity in the conversion of light hydrocarbon long distillate is 180 h and that of distilled gasoline is 290 h.

Example5 . The catalyst produced in accordance with example 1 was subjected to treatment for 8 hours by the gas mixture whose composition is similar to that used in example 2. The period of stable activity in the conversion of light hydrocarbon long distillate is 250 h and that of distilled gasoline is 480 h.

Example6 . The catalyst produced in accordance with example 1 was subjected to treatment for 10 hours by the gas mixture whose composition is similar to that used in example 2. The period of the catalyst stable activity in the conversion of light hydrocarbon long distillate is 180 h and that of distilled gasoline is 290 h.

The treatment by the gas mixture for more than 10 hours resulted in the reduction of the period of the catalyst stable activity.

The effect of temperature in the treatment of catalyst samples by gas mixture is shown in examples 7, 8, and 9.

It should be noted that the catalyst treatment at the temperatures below 450°C was inadequate to achieve high activity of the catalyst. At temperatures over 550 °C the reduction in catalyst activity was noted.

Example 7. The catalyst was prepared in accordance with example 1, except for the fact that the treatment by gas mixture was conducted at 450 °C. In this case the period of stable activity in the conversion of light hydrocarbon long distillate is 170 h, and that of distilled gasoline is 300 h. However, under these conditions the yield of aromatic hydrocarbons was 38.4%.

Example 8. The catalyst was produced in accordance with example 1, except for the fact that the treatment by the gas mixture was conducted at 550 °C. Under these conditions the yield of aromatic hydrocarbons is 48,2 %, the period of stable activity in the conversion of light hydrocarbon long distillate is 200 h and that of distilled gasoline is 390 h.

Example 9. The catalyst was produced in accordance with example 1, except for the fact that the treatment by the gas mixture was conducted at 600 °C. Under these conditions the yield of aromatic hydrocarbons fell to 20.1 %, the period of stable activity in the conversion of light hydrocarbon long distillate was 100 h and that of distilled gasoline was 190 h.

### Industrial applicability

This invention can be used most successfully in the processes of the conversion of light hydrocarbon material into motor blending fuel. Implementation of the method does not necessitate the creation of special equipment and can be performed in any known equipment.

## Claims

1. A process for producing a ceolite-containing catalyst for the conversion of hydrocarbon material into motor fuel which comprises mixing an ammonium-form ZSM-5 ceolite powder with a zinc salt solution and an ammonium salt solution, filtration of the mixture, flushing of a deposit in water, evaporation, formation of granules with aluminum oxide as a binder, drying and calcination, differing in that a zirconium acetate solution is added to the mixture, and that after calcination the granules are subjected to the treatment at 450 ÷ 550 °C for 5 ÷ 10 h by the gas mixture of the following composition, mass %:
| | |
|---|---|
| Carbon oxide | 4 ÷ 8 |
| Carbon dioxide | 4 ÷ 12 |
| Hydrogen | 6 ÷ 8 |
| Oxygen | 2 ÷ 6 |
| Water vapor | 2 ÷ 4 |
| Nitrogen | balance |
